# FASCICULE DE BREVET EUROPEEN

(11) **EP 0 908 829 B1**
(45) Date de publication et mention de la délivrance du brevet: **03.01.2007**
(21) Numéro de dépôt: 98402450.5
(22) Date de dépôt: 06.10.1998
(51) Int. Cl.: G06F 13/18

(54) **Procédé et système perfectionnés de contrôle d'accès partagés à une mémoire vive**
Verteiltes Speicherzugriffsteuersystem und Verfahren
Distributed memory access control system and method

(30) Priorité: 09.10.1997 FR 9712634
(43) Date de publication de la demande: 14.04.1999
(73) Titulaire: STMicroelectronics S.A., 92120 Montrouge (FR)
(72) Inventeur: Tournier, Christian, 38170 Seyssinet-Pariset (FR)
(74) Mandataire: Casalonga, Axel

(56) Documents cités:
- US-A- 4 181 933
- US-A- 4 313 161
- "Dynamic Random Access Memory Refresh Method in Triple-Modular-Redundant System" IBM TECHNICAL DISCLOSURE BULLETIN., vol. 36, no. 7, juillet 1993, pages 7-12, XP000383584 NEW YORK US
- PATENT ABSTRACTS OF JAPAN vol. 11, no. 147 (P-575), 14 mai 1987 & JP 61 282954 A (HITACHI), 13 décembre 1986

## Description

L'invention concerne le contrôle d'accès partagés à une mémoire vive par plusieurs entités pouvant fonctionner de façon complètement asynchrone.

L'invention s'applique avantageusement mais non limitativement au domaine de la télévision. En effet, dans une telle application, les données affichées sur l'écran du téléviseur sont délivrées par un contrôleur d'écran après lecture d'une mémoire vive dont le contenu est le résultat d'un traitement logiciel effectué par un microprocesseur.

Or, les signaux d'horloge cadençant respectivement le contrôleur d'écran et le microprocesseur sont totalement asynchrones en fréquence et en phase et chacune de ces deux entités peut être susceptible de vouloir accéder à la mémoire à un même instant.

Une solution pour résoudre de tels accès partagés consiste à utiliser des mémoires dites "double accès", c'est-à-dire pour lesquelles deux entités sont capables aussi bien de lire ou d'écrire simultanément ou non dans chacune des cellules ou points mémoire de la mémoire. Or, une telle solution nécessite l'utilisation de mémoires de structure complexe et peut conduire à des dysfonctionnements dans certains cas spécifiques, en particulier lorsque l'une des entités souhaite écrire dans un point-mémoire alors que quasi sumultanément, l'autre entité souhaite lire ledit point-mémoire.

L'invention vise à apporter une solution radicalement différente au contrôle d'accès partagés à une même mémoire.

Ainsi, l'invention propose l'utilisation d'une mémoire vive simple accès, dont le partage n'est pas physique par différents accès (comme dans les mémoires double accès) mais temporel. Plus précisément, on effectue un partage temporel des demandes d'accès à la mémoire, et les accès partagés à la mémoire sont gérés par un séquenceur qui va segmenter le temps en fenêtres d'accès réservées de façon spécifique à chacune des entités utilisatrices de la mémoire. Le séquenceur est rythmé par une horloge choisie en fonction des priorités des différentes entités. Le signal d'horloge interne de l'entité la plus prioritaire sera celui qui rythmera le séquenceur. Enfin, une entité non prioritaire, ou auxiliaire, devra, à chacune de ses demandes d'accès, attendre que vienne sa prochaine fenêtre d'accès afin de lire ou stocker les données en cours de traitement.

Ceci étant, la priorité donnée à une entité particulière va induire pour les autres entités moins prioritaires l'apparition de retards dans leurs propres exécutions. Ces retards, dans le cadre de processus totalement asynchrones et de périodicités différentes, vont être d'une part totalement imprédictibles et d'autre part non calculables de façon déterministe. En supposant alors qu'un processus non prioritaire doive lui-même supporter des contraintes de temps réel, il est clair que sa propre bonne exécution se trouve compromise. En d'autres termes, le temps de réponse du système est alors variable pour le processus auxiliaire, ce qui est particulièrement gênant par exemple quand l'entité auxiliaire comporte une unité centrale d'un microprocesseur devant gérer une interface RS 232 (le débit de cette interface pouvant en effet sortir des spécifications imposées, du fait du cumul aléatoire des retards). Par ailleurs, le temps de réponse du système est variable et probabiliste, ce qui est pénalisant pour une application temps réel.

Aussi, en combinaison avec les caractéristiques qui viennent d'être évoquées plus haut, l'invention propose en outre, afin de prévenir la génération de retards aléatoires dans l'exécution du traitement de données des processus auxiliaires, de "forcer" ces retards à une valeur maximale correspondant de préférence au pire cas potentiel. Le retard devient alors fixe. La mémoire se comporte alors comme une mémoire à temps d'accès plus "lent" mais dont le temps de réponse est totalement déterministe.

En d'autres termes, telle que revendiquée, l'invention propose un procédé de contrôle d'accès partagés à une mémoire vive, dans lequel plusieurs entités périphériques cadencées respectivement par leur propre signal d'horloge interne, sont susceptibles d'accéder à ladite mémoire.

Selon une caractéristique générale de l'invention, la mémoire vive est une mémoire simple accès, c'est-à-dire à accès unique, et on définit une entité prioritaire parmi l'ensemble des entités périphériques, les autres entités étant définies comme étant des entités auxiliaires, et l'une au moins de ces entités auxiliaires comporte une unité centrale d'un microprocesseur et des moyens d'entrée/sortie reliés à ladite mémoire pour contenir une donnée devant être écrite dans la mémoire ou une donnée extraite de la mémoire et devant être lue par l'unité centrale. On élabore une trame temporelle répétitive, rythmée par le signal d'horloge interne de l'entité prioritaire, cette trame étant subdivisée en fenêtres temporelles formant plusieurs groupes de fenêtres respectivement alloués aux entités périphériques. En présence d'un signal de requête d'accès à la mémoire émis par l'unité centrale au cours d'une fenêtre temporelle qui ne lui est pas allouée, on valide la donnée présente dans les moyens d'entrée/sortie au cours de la prochaine fenêtre temporelle allouée à ladite unité centrale, et on gèle le fonctionnement interne de l'unité centrale jusqu'à un instant prédéterminé postérieur à l'instant de validation de données et séparé de l'instant d'émission dudit signal de requête d'accès d'une durée prédéterminée correspondant à un nombre prédéterminé de périodes du signal d'horloge interne de l'unité centrale.

Dans une application de télévision, l'entité prioritaire sera avantageusement le contrôleur d'écran.

Cette durée prédéterminée peut être une durée fixe ou bien modifiable par l'unité centrale.

L'invention a également pour objet un système de contrôle d'accès partagés à une mémoire vive.

Selon une caractéristique générale de l'invention, ce système comprend :
- une mémoire vive simple accès connectée sur un bus de données et un bus d'adresses,
- plusieurs entités périphériques, réparties en une entité prioritaire et en entités auxiliaires, cadencées respectivement par leur propre signal d'horloge interne. L'une au moins de ces entités auxiliaires comporte une unité centrale d'un microprocesseur. Chaque entité périphérique est apte à délivrer un signal de requête d'accès à la mémoire et comporte des moyens d'entrée/sortie, connectés sur les bus de données et d'adresses. Ces moyens d'entrée/sortie sont aptes à contenir une donnée extraite de la mémoire ou une donnée devant être écrite dans la mémoire. Ces moyens d'entrée/sortie possèdent par ailleurs un port de contrôle pour recevoir au moins un signal de validation de la donnée contenue dans les moyens d'entrée/sortie.

Le système selon l'invention comprend par ailleurs une interface de contrôle comportant un séquenceur rythmé par le signal d'horloge interne de l'entité prioritaire, de façon à élaborer une trame temporelle répétitive subdivisée en fenêtres temporelles formant plusieurs groupes de fenêtres respectivement alloués aux entités périphériques. L'interface comprend également des moyens de contrôle aptes en réponse à un signal de requête d'accès émanant de l'unité centrale au cours d'une fenêtre temporelle qui ne lui est pas allouée, à délivrer aux moyens d'entrée/sortie de cette entité périphérique, le signal de validation de données uniquement au cours d'une fenêtre allouée à cette entité périphérique. L'interface comporte également des moyens d'inhibition aptes, en présence dudit signal de requête d'accès, à geler le fonctionnement interne de l'unité centrale jusqu'à un instant prédéterminé postérieur à l'instant de réception du signal de validation de données et séparé de l'instant d'émission dudit signal de requête d'accès d'une durée prédéterminée correspondant à un nombre prédéterminé de périodes du signal d'horloge interne de l'unité centrale.

Selon un mode de réalisation de l'invention, les moyens d'inhibition comportent un compteur cadencé par le signal d'horloge interne de l'unité centrale, des moyens de comparaison aptes à comparer la valeur courante du compteur audit nombre prédéterminé, et une bascule reliée à la sortie des moyens de comparaison pour délivrer un signal de sortie définissant en fonction de sa valeur logique un signal de gel ou de non gel du fonctionnement interne de l'unité centrale.

Les moyens d'inhibition comportent avantageusement des moyens de détection des transitions du signal de validation de données ainsi qu'une porte logique ET dont la sortie est reliée à ladite bascule et dont les deux entrées sont respectivement reliées à la sortie des moyens de comparaison et à la sortie des moyens de détection.

Ce "gel" ou cette inhibition du fonctionnement de l'unité centrale peut se traduire par une interruption totale du fonctionnement de l'unité centrale ou bien par un gel ou un figeage du contenu des registres ou bascules internes de telle sorte qu'il n'y ait plus aucune évolution des données délivrées par ces bascules jusqu'à désactivation du signal de gel.

D'autres avantages et caractéristiques de l'invention apparaîtront à l'examen de la description détaillée d'un mode de réalisation et de mise en oeuvre, nullement limitatif, et des dessins annexés, sur lesquels :
la figure 1 est un synoptique schématique d'un système de contrôle d'accès partagés selon l'invention,
la figure 2 illustre une trame temporelle permettant le partage temporel des accès à la mémoire, et
la figure 3 illustre plus en détail, mais toujours de façon schématique, une partie du dispositif de la figure 1.

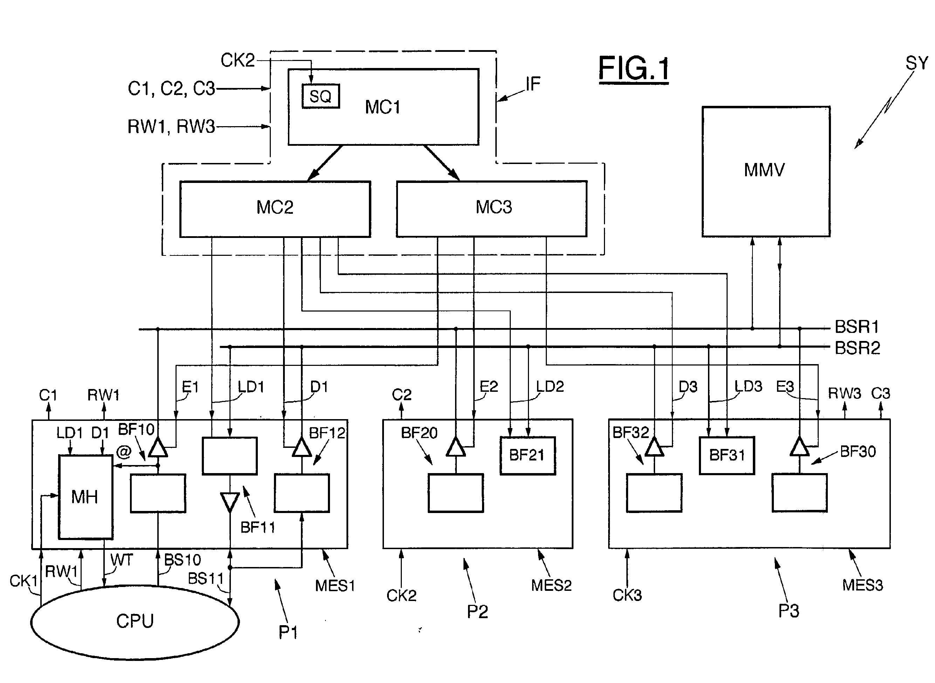

Sur la figure 1, la référence SY désigne d'une façon générale un système selon l'invention, permettant ici de contrôler les accès de trois entités périphériques, ou plus simplement périphériques, P1, P2 et P3, à une mémoire vive MMV.

L'un de ces périphériques, en l'espèce le périphérique P1, comporte dans l'exemple décrit, une unité centrale de microprocesseur CPU ainsi que des moyens d'entrée/sortie MES 1 connectés sur le bus d'adresses BSR1 de la mémoire et sur le bus de données BSR2 de cette mémoire.

D'une façon classique, ces moyens d'entrée/sortie MES1 comportent un port de sortie BF10, connecté sur le bus d'adresses BSR1, comportant une mémoire tampon, connectée sur le bus d'adresses BS10 de l'unité centrale pour stocker une adresse. Ce port de sortie BF10 est commandé de façon classique par un signal de validation d'adresse E1 permettant de valider et de délivrer effectivement l'adresse sur le bus d'adresses BSR1 de la mémoire.

De même, les moyens d'entrée/sortie MES 1 comportent un port d'entrée de données BF11 comportant une mémoire tampon, connectée entre le bus de données BSR2 de la mémoire MV et le bus de données BS 11 de l'unité centrale. Ce port d'entrée est commandé par un signal LD1 de validation de la donnée extraite de la mémoire MMV.

D'une façon analogue, pour l'écriture d'une donnée dans la mémoire MMV, les moyens MES 1 comportent un port de sortie de données BF12 commandé par un signal de validation de donnée D1 permettant d'écrire effectivement la donnée dans la mémoire MMV.

Ces moyens MES 1 comportent bien entendu un port de contrôle pour l'échange des différents signaux de validation E1, LD1, D1, mais aussi pour délivrer un signal C1 de requête d'accès à la mémoire et un signal RW1 représentatif du sens lecture/écriture.

Le deuxième périphérique P2, qui est par exemple dans une application de télévision, le contrôleur d'écran, comprend des moyens d'entrée/sortie MES2 comportant un port de contrôle et un port de sortie BF20, connecté sur le bus d'adresses BSR1 de la mémoire, comportant notamment un pointeur d'adresses et commandable par un signal de validation d'adresses E2. En outre, ces moyens d'entrée/sortie MES2 comportent ici uniquement un port d'entrée de données BF21 comportant une mémoire tampon, connectée sur le bus de données BSR2 de la mémoire et commandable par un signal de validation de données LD2.

Les moyens d'entrée/sortie MES3 du troisième périphérique P3 qui peut être par exemple un dispositif d'échantillonnage de données, comportent d'une façon analogue des ports de contrôle et de données BF31 et BF32 en lecture et en écriture, respectivement commandés par des signaux de validation LD3 et D3, ainsi qu'un port d'adresses BF30, commandé par un signal de validation E3 et comportant notamment un pointeur d'adresses.

Le système selon l'invention comporte également une interface IF permettant de contrôler et de gérer les accès à la mémoire MMV.

Matériellement, cette interface IF comporte des moyens de traitement qui peuvent être réalisés au moins partiellement de façon logicielle au sein d'un micro-contrôleur par exemple, ou bien par un circuit intégré spécifique (ASIC), soit encore par simple intégration matérielle ("hardware") dans le système (circuit intégré par exemple).

Sur la figure 1, on a décomposé fonctionnellement l'interface IF en un contrôleur principal MC1 comportant notamment un séquenceur SQ rythmé par le signal d'horloge de l'un des périphériques de façon à élaborer une trame temporelle répétitive dont on reviendra plus en détail ci-après sur la structure, et en un contrôleur du bus de données MC2 délivrant les signaux de validation de données LDi et/ou Di et en un contrôleur de bus d'adresses MC3 délivrant les signaux de validation d'adresses Ei.

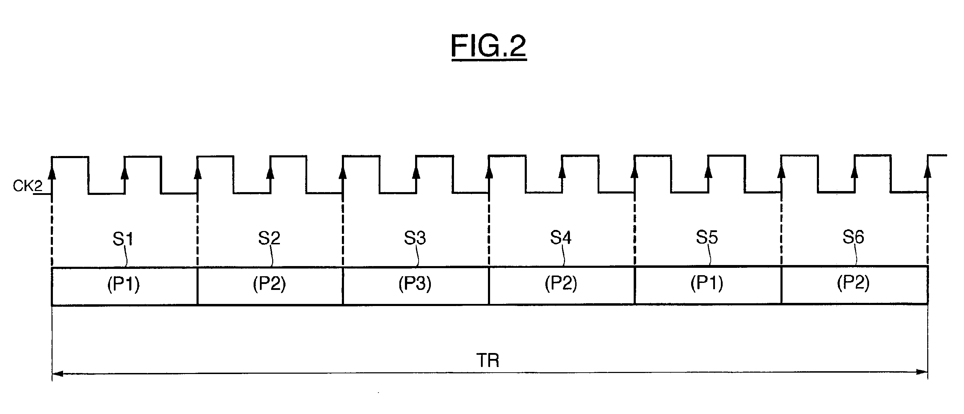

L'élaboration de la trame temporelle répétitive TR (figure 2) dépend du caractère prioritaire de l'un des périphériques. Plus précisément, on sélectionne parmi les entités périphériques P1, P2, P3, celle dont le traitement temps réel est le plus prioritaire, c'est-à-dire par exemple celle présentant le plus de contraintes temps réel.

Dans l'application spécifique de la télévision, le traitement temps réel prioritaire est celui gérant l'écran d'affichage de façon à ne pas détériorer la qualité et la stabilité de l'image affichée. C'est donc l'entité périphérique P2 correspondant au contrôleur d'écran, qui sera désignée comme étant l'entité prioritaire, les autres entités étant les entités auxiliaires.

En conséquence, la durée de la trame TR sera choisie ici comme étant la durée nécessaire pour afficher un caractère sur l'écran. Cette durée de trame TR correspond à un certain nombre de périodes du signal d'horloge CK2 du contrôleur d'écran. Ce nombre de périodes d'horloge est typiquement égal à 18, mais, à des fins de simplification, on n'en a représenté que 12 sur la figure 2.

On suppose par ailleurs, à des fins de simplification, que le traitement d'affichage proprement dit nécessite trois accès à la mémoire au cours de fenêtres temporelles S2, S4 et S6, ayant chacune une durée de deux périodes du signal d'horloge CK2.

Les fenêtres d'accès de l'entité prioritaire ayant été définies, on réserve les fenêtres d'accès restantes, à savoir les fenêtres S1, S3 et S5, aux autres entités périphériques. A titre indicatif, on alloue à l'unité centrale CPU les fenêtres S1 et S5, tandis que l'on alloue à l'entité périphérique P3 la fenêtre S3.

Le séquenceur de l'interface de contrôle est rythmé par le signal d'horloge CK2 de l'entité prioritaire. En conséquence, les demandes d'accès successives C2 émises par le périphérique P2 seront synchrones avec l'occurence des fenêtres temporelles S2, S4 et S6. Les signaux de validation d'adresses E2 et LD2 seront donc délivrés par les moyens de contrôle MC2 et MC3 au cours de ces fenêtres temporelles autorisant aussi l'accès du périphérique P2 à la mémoire MMV.

Par contre, en ce qui concerne les autres périphériques, et notamment le périphérique P3, si un signal de requête d'accès C3 est émis au cours d'une fenêtre temporelle qui n'est pas allouée à ce périphérique, par exemple la fenêtre S1, l'interface de contrôle ne délivrera le signal de validation d'adresses E3 et le signal de validation de données D3 ou LD3 en fonction de la valeur logique d'un signal RW3, qu'au cours de la prochaine fenêtre d'accès qui est allouée au périphérique P3, en l'espèce la fenêtre S3. Ainsi, le périphérique P3 n'aura effectivement accès à la mémoire MMV qu'au cours de la fenêtre S3 qui lui est allouée.

Le même principe est appliqué au périphérique P1 dans le cas où un signal de requête d'accès C1, associé à un signal de requête RW1 d'écriture ou de lecture, est émis par le périphérique P1 au cours d'une fenêtre temporelle d'accès qui ne lui est pas alloué. Cependant, il convient en outre de geler le fonctionnement interne de l'unité centrale CPU jusqu'à la réception du signal de validation LD1 ou D1 en fonction du sens lecture ou écriture.

Cependant, l'homme du métier remarque que si la requête d'accès émanant de l'unité centrale est délivrée au début de la fenêtre temporelle S6, l'unité centrale devra être gelée pendant deux périodes du signal d'horloge CK2. Mais, si la requête d'accès émanant de l'unité centrale est délivrée au début de la fenêtre S2, l'unité centrale devra être gelée pendant six périodes d'horloge CK2, voire pendant sept périodes du signal d'horloge CK2 si la requête d'accès est émise dans la deuxième moitié de la fenêtre temporelle S1.

Par contre, si la requête d'accès est émise par l'unité centrale au début de la fenêtre temporelle S1, la réception du signal de validation LD1 ou D1 interviendra au cours de cette fenêtre temporelle S1.

En conséquence, la durée de gel de l'unité centrale peut dans le cas présent être inexistante ou bien au maximum égale à sept périodes du signal d'horloge CK2.

Afin d'uniformiser cette durée de gel, on la fixe à une valeur prédéterminée correspondant au retard maximum prévisible, en l'espèce sept périodes du signal d'horloge CK2.

En d'autres termes, quel que soit l'instant d'émission de la requête d'accès par l'unité centrale, que ce soit au cours d'une fenêtre qui lui est allouée ou au cours d'une fenêtre qui ne lui est pas allouée, celle-ci sera gelée dans la durée de gel prédéterminée alors que les signaux de validation de données LD1 ou D1 seront délivrés par l'interface de contrôle au cours d'une fenêtre temporelle allouée à l'unité centrale durant cette période de gel.

A cet effet, l'interface de contrôle IF comporte des moyens d'inhibition MH que l'on a représentés ici à des fins de simplification à l'intérieur du bloc MES 1.

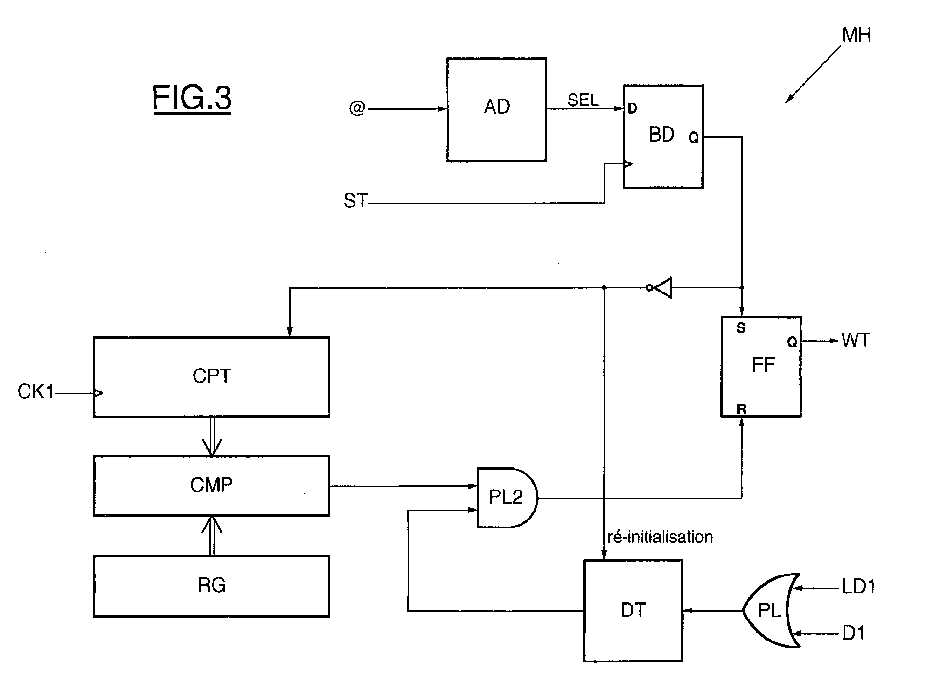

Plus précisément, comme illustré sur la figure 3, ces moyens d'inhibition MH comportent un décodeur d'adresses AD recevant l'adresse émise sur le bus BS10 de l'unité centrale et destiné à vérifier que cette adresse correspond bien à une adresse effective de la mémoire. Si tel est le cas, le signal SEL de sortie du décodeur passe au niveau logique "1" et est stocké dans une bascule référencée BD commandée par le signal de validation d'adresses ST délivré par l'unité centrale. Lorsque ce signal de validation d'adresses ST passe à 1, la sortie de la bascule BD qui est reliée à l'entrée d'une bascule de sortie FF (flip flop) fait passer la sortie de cette bascule FF à 1. Le signal logique correspondant WT, qui est délivré à l'unité centrale CPU, agit alors comme un signal de gel de cette unité centrale. Il convient de noter également que le passage du signal WT de l'état logique "0" à l'état logique "1" peut être utilisé comme une condition de génération du signal de requête d'accès C1.

Les moyens d'inhibition MH comportent par ailleurs un compteur CPT cadencé par le signal d'horloge interne CK1 de l'unité centrale et initialisable par le signal de sortie inversé de la bascule BD. Des moyens de comparaison CMP sont associés à ce compteur pour comparer la valeur courante du compteur à un nombre prédéterminé de périodes du signal d'horloge auxiliaire CK1 correspondant à la durée de gel prédéterminée. Ce nombre prédéterminé de périodes du signal CK1 est par exemple stocké dans un registre RG qui peut être modifiable de façon logicielle par l'unité centrale elle-même. La sortie du comparateur CMP est reliée à l'une des entrées d'une porte logique ET référencée PL2 dont la sortie est reliée à l'entrée de remise à zéro de la bascule de sortie FF.

Les moyens d'inhibition MH comportent par ailleurs un détecteur de transitions DT dont la sortie est reliée à l'autre entrée de la porte logique PL2. L'entrée du détecteur DT est reliée à la sortie d'une porte logique OU, référencée PL, et recevant en entrée les signaux de validation LD1 et D1. Par ailleurs, le détecteur est également initialisable par le signal de sortie inversé de la bascule BD.

L'émission par le contrôleur MC2 de l'interface de contrôle du signal de validation de données LD 1 ou D1 (en fonction du sens lecture ou écriture requis), se traduit par une transition montante du signal correspondant. Lors du passage du signal WT à 1, le compteur CPT est initialisé de même que le détecteur DT. Lorsque celui-ci atteint la valeur prédéterminée contenue dans le registre RG, le comparateur CMP fait passer l'entrée de la porte logique PL2 à 1. Comme généralement, le signal de validation de donnée LD1 ou D1 a été délivré avant que le compteur n'ait atteint sa valeur finale de comptage, l'autre entrée de la porte logique PL2 est également à 1, ce qui a pour effet de remettre la sortie de la bascule FF à zéro, c'est-à-dire de refaire passer à l'état bas le signal de gel WT. On réactive alors le fonctionnement interne de l'unité centrale CPU.

L'homme du métier remarque ici que le détecteur de transitions DT et la porte logique PL associée, ne sont pas réellement indispensables. En effet, généralement la valeur finale de comptage est choisie suffisamment élevée pour intervenir après la réception du signal de validation de donnée LD1 ou D1. Cependant, notamment en raison du fait que la valeur contenue dans le registre RG peut être modifiable par logiciel, et pour éviter que l'instant de réactivation du fonctionnement interne de l'unité centrale CPU n'intervienne avant la validation de la donnée, il est préférable de conditionner également la remise à zéro de la sortie de la bascule FF à la réception effective du signal de validation de données LD1 ou D1.

## Revendications

1. Procédé de contrôle d' accès partagés à une mémoire vive, dans lequel plusieurs entités périphériques cadencées respectivement par leur propre signal d'horloge interne sont susceptibles d'accéder à ladite mémoire, **caractérisé par le fait que**, la mémoire vive (MMV) étant une mémoire simple accès, on définit une entité prioritaire (P2) parmi l'ensemble des entités périphériques, les autres entités (P1, P2), dont l'une au moins comporte une unité centrale d'un microprocesseur et des moyens d'entrée/sortie reliés à ladite mémoire aptes à contenir une donnée devant être écrite dans la mémoire ou une donnée extraite de la mémoire et devant être lue par l'unité centrale, étant définies comme étant des entités auxiliaires, on élabore une trame temporelle répétitive (TR), rythmée par le signal d'horloge interne (CK2) de l'entité prioritaire, et subdivisée en fenêtres temporelles (S1-S6) formant plusieurs groupes de fenêtres respectivement alloués aux entités périphériques, et en présence d'un signal de requête d'accès à la mémoire émis par l'unité centrale au cours d'une fenêtre temporelle qui ne lui est pas allouée, on valide la donnée présente dans les moyens d'entrée/sortie au cours de la prochaine fenêtre temporelle allouée à ladite unité centrale, et on gèle le fonctionnement interne de l'unité centrale jusqu'à un instant prédéterminé postérieur à l'instant de validation de donnée et séparé de l'instant d'émission dudit signal de requête d'accès d'une durée prédéterminée corespondant à un nombre prédéterminé de périodes du signal d'horloge interne (CK1) de l'unité centrale.

2. Procédé selon la revendication 1, **caractérisé par le fait que** ladite durée prédéterminée est une durée fixe.

3. Procédé selon la revendication 1, **caractérisé par le fait que** ladite durée prédéterminée est modifiable par l'unité centrale.

4. Système de contrôle d'accès partagés à une mémoire vive, **caractérisé par le fait qu'**il comprend
une mémoire vive simple accès (MMV) connectée sur un bus de données et un bus d'adresses,
plusieurs entités périphériques (P1-P3), réparties en une entité prioritaire et en entités auxiliaires dont l'une au moins (P1) comporte une unité centrale d'un microprocesseur, toutes ces entités étant cadencées respectivement par leur propre signal d'horloge interne, aptes chacune à délivrer un signal de requête d'accès à la mémoire, et comportant chacune des moyens d'entrée/sortie, connectés sur les bus de données et d'adresses, aptes à contenir une donnée extraite de la mémoire ou une donnée devant être écrite dans la mémoire, et possédant un port de contrôle pour recevoir au moins un signal(LD1, D1) de validation de la donnée contenue dans les moyens d'entrée/sortie,
et une interface (IF) comportant un séquenceur (SQ) rythmé par le signal d'horloge interne de l'entité prioritaire de façon à élaborer une trame temporelle répétitive subdivisée en fenêtres temporelles formant plusieurs groupes de fenêtres respectivement alloués aux entités périphériques, et des moyens de contrôle (MC1-MC3) comportant des moyens de validation aptes en réponse à un signal de requête d'accès émis par l'unité centrale au cours d'une fenêtre temporelle qui ne lui est pas allouée, à délivrer aux moyens d'entrée/sortie de cette unité centrale le signal de validation de donnée uniquement au cours d'une fenêtre allouée à cette entité, et des moyens d'inhibition (MH) aptes, en présence dudit signal de requête d'accès à geler le fonctionnement interne de l'unité centrale jusqu'à un instant prédéterminé postérieur à l'instant de réception du signal de validation de donnée et séparé de l'instant d'émission dudit signal de requête d'accès d'une durée prédéterminée corespondant à un nombre prédéterminé de périodes du signal d'horloge interne (CK1) de l'unité centrale.

5. Système selon la revendication 4, **caractérisé par le fait que** les moyens d'inhibition (MH) comportent un compteur (CPT) cadencé par le signal d'horloge interne de l'unité centrale, des moyens de comparaison (CMP) aptes à comparer la valeur courante du compteur audit nombre prédéterminé, et une bascule (FF) reliée à la sortie des moyens de comparaison pour délivrer un signal de sortie (WT) définissant en fonction de sa valeur logique un signal de gel ou de non gel du fonctionnement interne de l'unité centrale.

6. Système selon la revendication 5, **caractérisé par le fait que** les moyens d'inhibition comportent des moyens de détection (DT) des transitions du signal de validation de donnée, et une porte logique ET (PL2) dont la sortie est reliée à ladite bascule et dont les deux entrées sont respectivement reliées à la sortie des moyens de comparaison (CMP) et à la sortie des moyens de détection (DT).

## Claims

1. Method for controlling shared accesses to a random access memory, in which process several peripheral entities clocked respectively by their own internal clock signal are capable of accessing the said memory, **characterized in that**, the random access memory (MMV) being a single-access memory, a priority entity (P2) is defined among the set of peripheral entities, the other entities (P1, P2), at least one of which comprises a central processing unit of a microprocessor and input/output means which are linked to the said memory and are able to contain a datum which is required to be written to the memory or a datum extracted from the memory and required to be read by the central processing unit, being defined as being auxiliary entities, a repetitive time frame (TR) is formulated, regulated by the internal clock signal (CK2) of the priority entity, and subdivided into time windows (S1-S6) forming several groups of windows, these groups being allocated respectively to the peripheral entities, and in the presence of a memory access request signal emitted by the central processing unit in the course of a time window which is not allocated to it, the datum present in the input/output means is enabled in the course of the next time window allocated to the said central processing unit, and the internal operation of the central processing unit is disabled until a predetermined instant subsequent to the datum enabling instant and separated from the instant of emission of the said access request signal by a predetermined duration corresponding to a predetermined number of periods of the internal clock signal (CK1) of the central processing unit.

2. Method according to Claim 1, **characterized in that** the said predetermined duration is a fixed duration.

3. Method according to Claim 1, **characterized in that** the said predetermined duration can be modified by the central processing unit.

4. System for controlling shared accesses to a random access memory, **characterized in that** it comprises
a single-access random access memory (MMV) connected to a data bus and an address bus, several peripheral entities (P1-P3) distributed into a priority entity and into auxiliary entities at least one (P1) of which comprises a central processing unit of a microprocessor, all these entities being clocked respectively by their own internal clock signal, each able to deliver a memory access request signal, and each comprising input/output means, connected to the data and address buses, able to contain a datum extracted from the memory or a datum required to be written to the memory, and possessing a control port for receiving at least one signal (LD1, D1) for enabling the datum contained in the input/output means,
and an interface (IF) comprising a sequencer (SQ) regulated by the internal clock signal of the priority entity in such a way as to formulate a repetitive time frame subdivided into time windows forming several groups of windows, these groups being respectively allocated to the peripheral entities, and control means (MC1-MC3) comprising enabling means which are able, in response to an access request signal emitted by the central processing unit in the course of a time window which is not allocated to it, to deliver the datum enabling signal to the input/output means of this central processing unit only in the course of a window allocated to this entity, and inhibiting means (MH) which are able, in the presence of the said access request signal, to disable the internal operation of the central processing unit until a predetermined instant subsequent to the instant of reception of the datum enabling signal and separated from the instant of emission of the said access request signal by a predetermined duration corresponding to a predetermined number of periods of the internal clock signal (CK1) of the central processing unit.

5. System according to Claim 4, **characterized in that** the inhibiting means (MH) comprise a counter (CPT) clocked by the internal clock signal of the central processing unit, comparison means (CMP) able to compare the current value of the counter with the said predetermined number, and a flip-flop (FF) linked to the output of the comparison means for delivering an output signal (WT) defining, depending on its logic value, a signal for disabling or for not disabling the internal operation of the central processing unit.

6. System according to Claim 5, **characterized in that** the inhibiting means comprise means (DT) for detecting the transitions of the datum enabling signal, and an AND logic gate (PL2) whose output is linked to the said flip-flop and whose two inputs are linked respectively to the output of the comparison means (CMP) and to the output of the detection means (DT).

## Patentansprüche

1. Verfahren zur Steuerung der verteilten Zugriffe auf einen Arbeitsspeicher, einem Verfahren, in welchem mehrere Peripherieeinheiten, die jeweils mit ihrem eigenen internen Taktsignal getaktet werden, auf den Speicher zugreifen können, **dadurch gekennzeichnet, daß**
aus der Gesamtheit der Peripherieeinheiten eine vorrangige Einheit (P2) definiert wird und die anderen Einheiten (P1,P3), von denen mindestens eine eine Mikroprozessor-Zentraleinheit und mit dem Speicher verbundene Eingabe/Ausgabe-Einrichtungen aufweist, die in den Speicher zu schreibende Daten oder aus dem Speicher zu holende und von der Zentraleinheit zu lesende Daten halten können, als nachrangige Einheiten definiert werden, wobei der Speicher (MMV) ein Speicher mit einfachem Zugriff ist,
ein sich wiederholender Zeitrahmen (TR) ausgearbeitet wird, der von dem internen Taktsignal (CK2) der vorrangigen Einheit getaktet wird und in Zeitfenster (S1-S6) unterteilt ist, die mehrere Fenstergruppen bilden, die jeweils den Peripherieeinheiten zugewiesen sind, und
bei Anwesenheit eines Speicherzugriff-Anforderungssignals, das von der Zentraleinheit während eines ihm nicht zugewiesen Zeitfensters ausgesandt worden ist, die in den Eingabe/Ausgabe-Einrichtungen vorhandenen Daten während des nächsten, dieser Einheit zugewiesenen Fensters freigegeben werden und der interne Betriebsablauf der Zentraleinheit bis zu einem vorgegebenen Zeitpunkt eingefroren wird, der nach dem Datenfreigabe-Zeitpunkt ist und vom Ausgabezeitpunkt des Zugriffsanforderungssignals um eine vorgegebene Zeitdauer beabstandet ist, die einer vorgegebenen Anzahl von Perioden des internen Taktsignals (CK1) der Zentraleinheit entspricht.

2. Verfahren nach Anspruch 1, **dadurch gekennzeichnet, daß** die vorgegebene Zeitdauer eine feste Dauer ist.

3. Verfahren nach Anspruch 1, **dadurch gekennzeichnet, daß** die vorgegebene Zeitdauer von der Zentraleinheit veränderbar ist.

4. System zur Steuerung der verteilten Zugriffe auf einen Arbeitsspeicher, **dadurch gekennzeichnet, daß** es aufweist:
einen Arbeitsspeicher mit einfachem Zugriff (MMV), der mit einem Datenbus und einem Adreßbus verbunden ist,
mehrere Peripherieeinheiten (P1-P3), die in eine vorrangige Einheit und in nachrangige Einheiten eingeteilt sind, von denen mindestens eine (P1) eine Mikroprozessor-Zentraleinheit aufweist, wobei alle diese Einheiten jeweils von ihrem eigenen internen Taktsignal getaktet werden, jeweils ein Speicherzugriff-Anforderungssignal ausgeben können und jeweils mit dem Datenbus und dem Adreßbus verbundene Eingabe/Ausgabe-Einrichtungen aufweisen, die aus dem Speicher geholte Daten oder in den Speicher zu schreibende Daten halten können und einen Steueranschluß aufweisen, um mindestens ein Freigabesignal (LD1, D1) zur Freigabe der in den Eingabe/Ausgabe-Einrichtungen gehaltenen Daten zu empfangen, und
eine Schnittstelle (IF), die aufweist eine Ablaufsteuerung (SQ), die von dem internen Taktsignal der vorrangigen Einheit getaktet wird, um einen sich wiederholenden Zeitrahmen auszuarbeiten, der in Zeitfenster unterteilt ist, die mehrere Fenstergruppen bilden, die jeweils den Peripherieeinheiten zugewiesen sind, und Steuereinrichtungen (MC1-MC3), die aufweisen:
Freigabeeinrichtungen, die als Antwort auf ein Zugriffsanforderungssignal, das von der Zentraleinheit während eines ihm nicht zugewiesenen Zeitfensters ausgesandt worden ist, das Datenfreigabesignal nur während eines Fensters, das dieser Einheit zugewiesen ist, zu den Eingabe/Ausgabe-Einrichtungen dieser Einheit ausgeben können, und
Hemmeinrichtungen (MH), die bei Anwesenheit des Speicherzugriff-Anforderungssignals den internen Betriebsablauf der Zentraleinheit bis zu einem vorgegebenen Zeitpunkt einfrieren können, der nach dem Zeitpunkt des Empfangs des Datenfreigabesignals ist und vom Ausgabezeitpunkt des Zugriffsanforderungssignals um eine vorgegebene Zeitdauer beabstandet ist, die einer vorgegebenen Anzahl von Perioden des internen Taktsignals (CK1) der Zentraleinheit entspricht.

5. System nach Anspruch 4, **dadurch gekennzeichnet, daß** die Hemmeinrichtungen (MH) einen von dem internen Taktsignal der Zentraleinheit getakteten Zähler (CPT), Vergleichseinrichtungen (CMP), die den aktuellen Wert des Zählers mit der vorgegebenen Anzahl vergleichen können, und ein mit dem Ausgang der Vergleichseinrichtungen verbundenes Flipflop (FF) aufweisen, um ein Ausgangssignal (WT) auszugeben, das in Abhängigkeit von seinem logischen Wert ein Signal zum Einfrieren oder ein Signal zum Nichteinfrieren des internen Betriebsablaufs der Zentraleinheit definiert.

6. System nach Anspruch 5, **dadurch gekennzeichnet, daß** die Hemmeinrichtungen Einrichtungen (DT) zur Detektion der Übergänge des Datenfreigabesignals und ein logisches UND-Gatter (PL2) aufweisen, dessen Ausgang mit dem Flipflop verbunden ist und dessen zwei Eingänge mit dem Ausgang der Vergleichseinrichtungen (CMP) und mit dem Ausgang der Detektionseinrichtungen (DT) verbunden sind.
